## Europäisches Patentamt
## European Patent Office
## Office européen des brevets

(19)

(11) Numéro de publication: **0 121 455**
**B1**

(12) # FASCICULE DE BREVET EUROPÉEN

(45) Date de publication du fascicule du brevet:
29.04.87

(51) Int. Cl.⁴: **H 02 G 5/06**

(21) Numéro de dépôt: **84400389.7**

(22) Date de dépôt: **27.02.84**

(54) **Procédé et dispositif de montage d'une barre blindée d'une installation électrique.**

(30) Priorité: **07.03.83 FR 8303810**

(43) Date de publication de la demande:
**10.10.84 Bulletin 84/41**

(45) Mention de la délivrance du brevet:
**29.04.87 Bulletin 87/18**

(84) Etats contractants désignés:
**BE CH DE FR GB IT LI NL SE**

(56) Documents cité:
**DE-A-1 285 044**
**FR-A-2 152 837**
**US-A-3 573 342**
**US-A-3 814 830**

(73) Titulaire: **MERLIN GERIN, Rue Henri Tarze, F-38050 Grenoble Cédex (FR)**

(72) Inventeur: **Henry, Georges, Merlin Gerin, F-38050 Grenoble Cedex (FR)**
Inventeur: **Kieffer, Jean, Merlin Gerin, F-38050 Grenoble Cedex (FR)**

(74) Mandataire: **Kern, Paul, Merlin Gerin Sce. Brevets 20, rue Henri Tarze, F-38050 Grenoble Cedex (FR)**

EP 0 121 455 B1

## Description

L'invention est relative à un procédé de montage d'un jeu de barres selon le préambule de la revendication 1.

La longueur des jeux de barres d'une installation électrique blindée, notamment d'un poste blindé haute tension, peut être variable de quelques mètres à quelques dizaines de mètres ou même plus et on fait couramment appel à des systèmes modulaires permettant de réduire le coût de fabrication et de montage. L'assemblage des jeux de barres est effectué sur le site même, ce qui implique un emballage séparé des éléments constitutifs, en l'occurrence les isolateurs de support, les enveloppes ou gaines et les barres conductrices. Cet assemblage d'éléments de longueur notable, par exemple de six mètres, nécessite des soins particuliers, notamment de propreté difficilement réalisables sur le site. L'emballage et le transport individuels des différents éléments occasionnent des frais notables.

Le document US-A-3 573 342 concerne un jeu de barres constitué par des tronçons assemblés en usine et raccordés sur le site. Chaque tronçon constitue un élément indépendant avec un isolateur support à chaque extrémité et après raccordement, ces isolateurs sont surabondants. Ce procédé n'est pas applicable à un jeu de barres à isolateur support intercalé entre deux tronçons successifs.

La présente invention a pour but de permettre un montage partiel en usine d'un jeu de barres du type précité, la barre étant logée dans son enveloppe pendant le transport selon les opérations successives précisées dans la revendication 1.

Le montage de la barre conductrice à l'intérieur de l'enveloppe en usine facilite évidemment l'assemblage des tronçons de barres sur le site ainsi que le transport de ces tronçons. Il est par contre indispensable d'éviter toute détérioration au cours du transport, et à cet effet de maintenir solidement la barre à l'intérieur de l'enveloppe. Selon la présente invention, l'une des extrémités de la barre est maintenue par l'isolateur conventionnel en forme de disque ou de cône fixé à l'une des brides de l'enveloppe. Cet isolateur servira après assemblage du tronçon adjacent au support de l'extrémité de la barre du tronçon suivant. L'extrémité libre de la barre est maintenue au cours du transport par un support amovible mis en place en usine et enlevé sur le site. Le document FR-A-2 152 837 est relatif à un isolateur support tripode, monté sur un chariot pour faciliter l'introduction d'une barre dans son enveloppe. Lors du retrait du chariot, le tripode prend appui sur la paroi de l'enveloppe pour maintenir rigidement la barre, mais il ne peut être retiré par la suite, indépendamment de la barre de l'enveloppe. La longueur de porte à faux, qui est supérieure à la longueur de la barre, nécessite un maintien temporaire pendant la mise en place et l'enlèvement du support amovible, afin d'éviter une rupture de l'isolateur support ou de la barre soumise à un effet de levier.

Selon un mode de mise en oeuvre de l'invention, l'isolateur support est traversé par une section de barre se terminant de part et d'autre de l'isolateur par une pince d'embrochage. La barre est introduite en usine à l'intérieur de l'enveloppe ou de la gaine à l'aide d'un chariot de support roulant sur l'enveloppe, de manière à embrocher l'extrémité de la barre dans la pince solidaire de l'isolateur de support. Après mise en place d'un outil de support de l'extrémité en porte à faux de la barre, le chariot peut être retiré de l'enveloppe et remplacé par un support amovible intercalé entre la barre et l'enveloppe. La barre est rigidement assujettie au support amovible, de façon à éviter tout mouvement relatif en cas de renversement de l'emballage ou de choc au cours du transport. L'assemblage sur site ne pose aucun problème particulier si l'on prend soin de ne jamais laisser l'extrémité libre de la barre en porte à faux. Au cours du transport, l'enveloppe est avantageusement fermée d'une manière étanche par un fond fixé sur la bride de l'enveloppe, l'ensemble étant rempli d'un gaz sous faible surpression. On évite ainsi toute introduction de poussière à l'intérieur de l'enveloppe.

Selon un autre mode de mise en oeuvre de l'invention, l'extrémité en porte à faux de la barre est supportée au cours du transport par un support amovible solidaire d'un fond d'obturation de l'enveloppe fixe sur la bride de cette dernière. A nouveau il est fait usage d'outils de support évitant que la barre soit en porte à faux pendant la mise en place ou l'enlèvement du support amovible.

L'invention est également relative à un dispositif de mise en oeuvre du procédé susmentionné, notamment à un embout latéral de l'enveloppe dans la zone d'extrémité de la barre conductrice permettant la mise en place d'un outil de support et le cas échéant d'un lien de fixation de la barre sur un support amovible.

D'autres avantages et caractéristiques ressortiront plus clairement de la description qui va suivre de trois modes de réalisation donnés à titre d'exemples non limitatifs et représentés aux dessins annexés, dans lesquels:

- la figure 1 est une vue schématique en coupe axiale d'un tronçon de barre représenté en cours d'introduction de la barre à l'intérieur de l'enveloppe;
- la figure 2 est une vue partielle de la fig. 1, montrant l'outil de support de l'extrémité de la barre et l'opération de retrait du chariot de support;
- la figure 3 est une vue de droite de la fig. 2;
- la figure 4 est une vue analogue à celle de la fig. 2, montrant la mise en place du support amovible;
- la figure 5 est une vue de droite de la fig. 4;
- la figure 6 est une vue analogue à celle de la fig. 1, montrant le tronçon modulaire prêt à expédition;

- la figure 7 est une vue à échelle agrandie en coupe sur la ligne VII-VII de la fig. 6;

- la figure 8 est une vue analogue a celle de la fig. 2, illustrant la mise en place d'un outile de support;

- la figure 9 est une vue de droite de la fig. 8;

- la figure 10 est une vue en coupe axiale montrant l'assemblage de deux tronçons successifs;

- la figure 11 est une vue analogue à celle de la fig. 6, illustrant une variante de réalisation selon l'invention;

- les figures 12 et 13 sont des vues analogues aux figures 8 et 9, montrant le tronçon selon la figure 11, après enlèvement du support amovible;

- la figure 14 est une vue à échelle agrandie du support amovible représenté à la figure 11;

- la figure 15 est une vue analogue à celle de la fig. 7, illustrant une autre variante.

Sur les figures, une enveloppe cylindrique ou gaine métallique 10 porte à ses extrémités des brides de fixation 12, 14. A la bride 14 est fixé en usine par des vis ou boulons (non représentés) un isolateur support 16 en forme de disque ou de cône traversé par une section 18 d'une barre conductrice. La section 18 porte de part et d'autre des pinces d'embrochage 20, 22 bien connues des spécialistes susceptibles de recevoir à embrochage l'extrémité d'une barre conductrice 24. Dans l'exemple illustré par les figures, la somme des longueurs de la barre 24 et de la section 18 est égale à la longueur de l'enveloppe 10, celle-ci pouvant être de plusieurs mètres, par exemple de six mètres. En assemblant plusieurs tronçons modulaires on peut réaliser des jeux de barres de grande longueur, la barre 24 étant rigidement fixée par les isolateurs de support 16 intercalés entre les brides 12, 14 des tronçons successifs. L'enveloppe 10 est remplie d'un gaz à rigidité diélectrique elevée, notamment d'hexafluorure de soufre, l'étanchéité étant assurée par les isolateurs support 16.

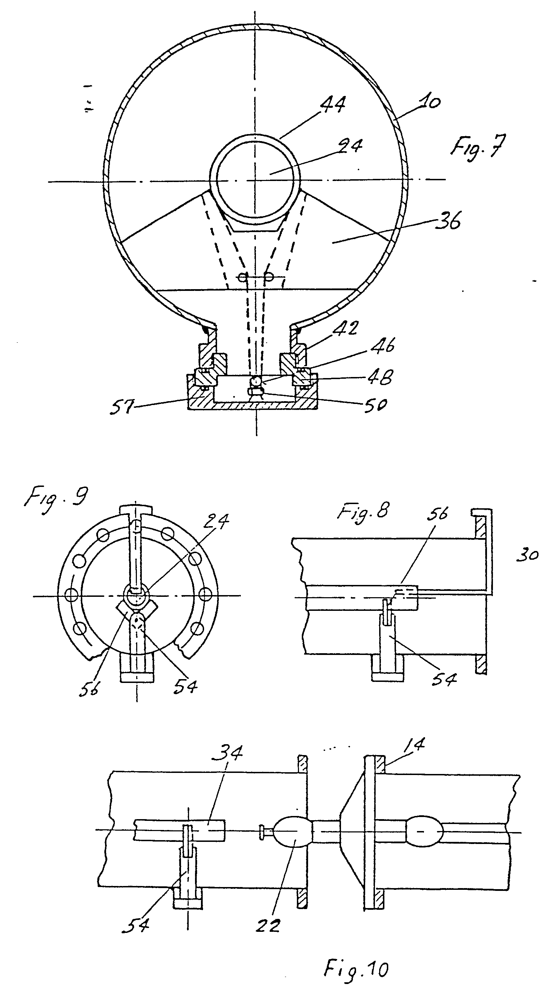

Selon la présente invention, le montage du tronçon modulaire est réalisé en usine, ce qui facilite le respect des conditions de propreté et de précision de montage. Après fixation de l'isolateur support 16 sur la bride 14, on introduit la barre 24 à l'intérieur de l'enveloppe 10 en la supportant par un ou plusieurs chariots 26 roulant sur le fond de l'enveloppe 10. En fin d'insertion de la barre 24, l'extrémité tubulaire de cette dernière s'embroche sur un doigt de centrage 28 guidant la barre 24 pour l'embrochage dans la pince 20. Dans cette position embrochée la barre 24 est maintenue d'une part par la pince d'embrochage 20 avec le doigt de guidage 28, et d'autre part par le ou les chariots 26. Avant de retirer les chariots 26 on met en place un outil de support 30 en forme de crochet dont l'une des extrémités s'accroche ou est fixée à la bride 12 et dont l'extrémité opposée 32 pénètre dans l'extrémité tubulaire 34 de la barre 24. La barre 24 étant supportée par le crochet 30, le ou les chariots 26 peuvent être retirés pour laisser la place à un support amovible 36 en forme de socle introduit par l'extrémité ouverte de l'enveloppe 10 et inséré entre la barre 24 et le fond de l'enveloppe 10. Le support amovible 36 présente sur sa face supérieure une encoche 38 en V de support et de centrage de la barre 24, ainsi que des faces d'appui 40 sur le pourtour interne de l'enveloppe 10. La hauteur du support ou socle 36 correspond bien entendu au rayon de l'enveloppe 10 pour centrer correctement la barre 24. Le support amovible 36 est disposé au niveau d'un embout 42 prévu sur le fond de l'enveloppe 10 à proximité de l'extrémité 34 de la barre 24. En se référant plus particulièrement aux figures 6 et 7, on voit que l'embout 42 permet la mise en place d'un lien flexible de fixation 44, qui traverse le support amovible 36 par des orifices appropriés et ceinture la barre 24. Les deux extrémités du lien flexible 44, passent autour d'un goujon 46 porté par une bague 48 vissée sur l'embout 42. Après mise en tension du lien 44, les deux extrémités sont solidarisées par une agrafe 50 ou par tout autre moyen approprié. Il est facile de voir que le lien flexible 44 maintient la barre 24 en appui du support amovible 36, ce dernier étant plaqué contre la paroi de l'enveloppe 10. Après mise en place du lien flexible 44 ou éventuellement préalablement à cette mise en place, le crochet 30 est enlevé et remplacé par un fond 52 obturant d'une manière étanche l'extrémité de l'enveloppe 10. Un capot protecteur 53 coiffe l'isolateur support 16 et un bouchon 57 obture l'embout 42, de manière à réaliser une enceinte étanche avantageusement remplie d'un gaz en légère surpression pour éviter toute introduction de poussière ou d'impuretés. L'ensemble modulaire prêt à l'emballage et à l'expédition est représenté à la figure 6, et il est facile de voir que la barre 24 est rigidement maintenue à l'intérieur de l'enveloppe 10 sans aucun risque de détérioration de l'isolateur support 16.

L'assemblage de deux modules successifs sur le site de l'installation est réalisé d'une manière particulièrement simple par enlèvement du fond 52 et mise en place de l'outil ou crochet 30 permettant d'enlever le lien 44 et de retirer le support amovible 36 à l'extérieur de l'enveloppe 10. On introduit d'une manière connue en soi par l'embout 42 un outil de support 54 se terminant par une fourche en V 56 à dents repliables embrassant le pourtour externe de la barre 24. L'outil 54 est fixé à l'embout 42 par tout moyen approprié de manière à constituer un support rigide de la barre 24 permettant le retrait et l'enlèvement du crochet support 30. Les deux tronçons successifs peuvent ensuite être rapprochés de la manière illustrée par la figure 10, jusqu'à l'embrochage de l'extrémité 34 de la barre dans la pince 22 de l'élément suivant. Après embrochage et fixation par boulons ou vis des brides 12, 14 l'outil 54 peut être retiré par l'embout 42, les doigts 56 se repliant, et un bouchon d'obturation 57 est mis en place sur l'embout 42.

Il est facile de voir que les outils pour la mise en oeuvre du procédé selon l'invention sont particulièrement simples et que la mise à l'air de l'enveloppe 10 peut être limitée à une durée faible se limitant au temps de raccordement des deux tronçons successifs. Les opérations de nettoyage des éléments constitutifs peuvent être réalisées en usine, l'assemblage sur site étant réalisé sur un espace limité d'une manière particulièrement simple.

Les opérations successives, qui ressortent de l'exposé précédent peuvent être résumées en distinguant les opérations en usine et les opérations sur le site. En usine, après nettoyage des différents constituants l'isolateur support 16 et le capot de protection 53 sont fixés à la bride 14 de l'enveloppe 10. La barre 24 est introduite à l'aide de chariots 26 jusqu'à embrochage dans la pince 20. Un outil 30 prenant appui sur la bride 12 est embroché dans l'extrémité en porte à faux de la barre 24 avant le retrait des chariots 26. Le support amovible 36 est inséré entre la barre 24 et l'enveloppe 10 et le lien flexible 44 engagé par l'embout 42 est fixé sous tension autour de la broche 46 pour solidariser rigidement la barre 24, le support amovible 36 et l'enveloppe 10. Après enlèvement de l'outil 30, mise en place du fond 52 et remplissage de l'enveloppe 10 par un gaz sous pression, l'embout 42 est obturé par un bouchon 57 et l'ensemble est emballé de la manière usuelle.

Sur le site, après déballage de l'élément modulaire, le fond 52 est enlevé pour permettre la mise en place de l'outil de support 30. Le lien 44 est sectionné et le support amovible 36 extrait par l'ouverture de l'enveloppe 10. Le bouchon 57 aura bien entendu été enlevé préalablement pour donner accès au lien 44. Par l'ouverture libérée de l'embout 42, un outil 54 est introduit pour supporter l'extrémité de la barre 24 et permettre l'enlèvement de l'outil 30. Les deux éléments modulaires peuvent par la suite être raccordés, l'extremité de la barre s'embrochant dans la pince 22. Après serrage des brides 12, 14 et enlèvement de l'outil 54 les opérations usuelles de mise sous vide et de remplissage par le gaz à rigidité diélectrique élevée sont réalisées.

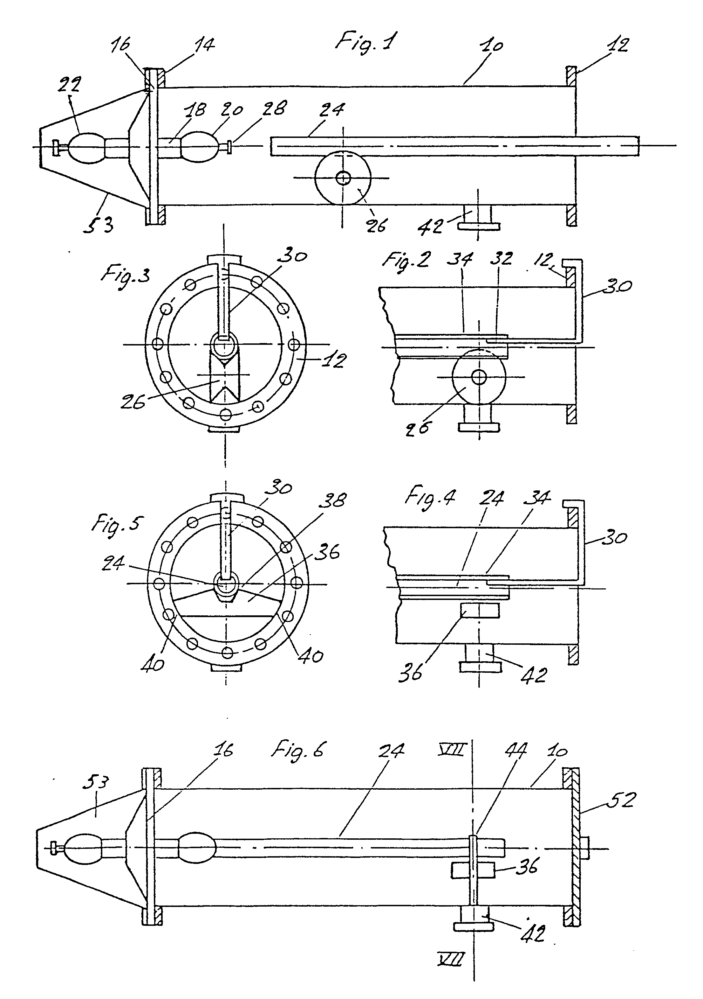

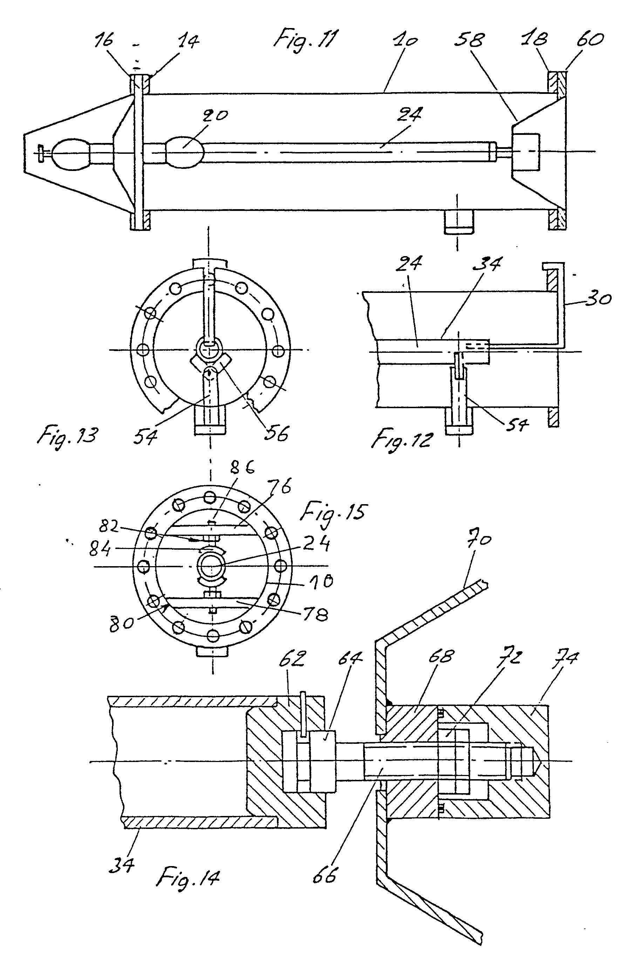

Il est clair que les outils de support ainsi que le support amovible peuvent être réalisés d'une manière différente et à titre d'exemple il est décrit par la suite deux modes de mise en oeuvre différents. Selon le premier, le support amovible est solidaire d'un fond susceptible d'être fixé à la bride 12. Les opérations de mise en place de la barre 24 à l'intérieur de l'enveloppe 10, illustrées par les figures 1 à 3, sont exactement identiques et ne seront pas décrites à nouveau. Après enlèvement du ou des chariots 26, un outil 54 à fourche repliable 56 est introduit par l'embout 42 pour supporter l'extrémité 34 de la barre 24 et permettre l'enlèvement de l'outil 30 en forme de crochet. (figures 12 et 13). L'outil amovible, désigné par le repère général 58, comporte une bride 60 susceptible d'être fixée par des boulons ou vis à la bride 12 de l'enveloppe 10, ainsi qu'un doigt de centrage et de support 62 susceptible de s'emboîter dans l'extrémité 34 de la barre 24. En se référant plus particulièrement à la figure 14, on voit que le doigt de support 62 est fixé à translation sur une tête 64 d'une tige filetée 66 vissée dans un écrou 68 solidaire d'un cône 70 porté par la bride 60. La tige filetée 66 s'étend dans le prolongement de la barre 24, et il est facile de voir qu'une rotation de cette tige 66 correspondant à un dévissage permet d'écarter le doigt 62 de l'extrémité de l'enveloppe 10 et de comprimer la barre 24. Un vissage inverse permet un retrait du doigt de centrage 62. La hauteur de l'outil amovible 58, plus particulièrement la hauteur du cône 70, et la longueur de la tige filetée 66 correspond bien entendu à l'espacement entre l'extrémité 34 de la barre 24 et la bride 12. Le support amovible 58 est agencé en fond étanche d'obturation de l'enveloppe 10. Après mise en place de l'outil amovible 58 et éventuellement serrage de la barre 24 par rotation de la tige filetée 66, la barre 24 est rigidement fixée et maintenue à l'intérieur de l'enveloppe 10 pour permettre son emballage et transport. L'outil 54 peut être maintenu en place ou retire pour un remplissage par un gaz de l'enveloppe 10. L'outil 30 est superflu si l'outil 54 peut être mis en place avant le retrait complet du chariot 26.

Sur le site il suffit de remettre en place l'outil 54 et de retirer le support amovible 58 pour permettre un assemblage des deux tronçons successifs de la manière décrite ci-dessus et représentée a la figure 10. Après mise en place du support amovible 58, la tige filetée 66 peut être bloquée par un écrou 72, la partie en saillie de la tige 66 étant avantageusement coiffée par un capuchon 74.

Le support amovible 58 présente l'avantage d'une symétrie et d'une possibilité de mise sous compression de la barre 24 évitant tout débrochage ou retrait de la pince 20. Le même support amovible 58 peut être utilisé pour le maintien d'une barre dont l'extrémité 34 fait saillie de la bride 12, le cône 70 étant dans ce cas monté vers l'extérieur par simple retournement du support 58. La tige filetée 66 est bien entendu vissée également du côté opposé de manière à orienter le doigt de centrage 62 en direction de la barre 24.

La figure 15 montre un autre mode de réalisation du support amovible constitué de deux cales 76, 78 intercalées entre la barre 24 et l'enveloppe 10. Chaque cale est en forme de traverse, qui prend appui par ses extrémités 80 sur la face interne de l'enveloppe 10 et porte en son milieu une mâchoire de serrage 82 constituée d'un mors 84 porté par une tige filetée 86 perpendiculaire à la traverse 76, 78. Un écrou vissé sur la tige 86 permet le serrage du mors 84 contre la barre 24.

Les cales 76, 78 sont introduites par l'extrémité de l'enveloppe 10 et les écrous sont serrés symétriquement à partir de l'exterieur pour positionner et caler la barre 24 au centre de l'enveloppe 10. La forme arrondie des mors 84 empêche tout déplacement latéral de la barre.

## Revendications

1. Procédé de montage d'un jeu de barres d'une installation électrique blindée à haute tension ayant une barre conductrice supportée coaxialement à l'intérieur d'une enveloppe tubulaire de blindage par des isolateurs support, ledit jeu de barres étant subdivisé en tronçons modulaires assemblés en usine et raccordés les uns aux autres sur le site, caractérisé en ce que successivement en usine : un isolateur support (16) est assujetti à l'une des extrémités (12, 14) de l'enveloppe (10) d'un tronçon, la barre (24) dudit tronçon est introduite par l'autre extrémité ouverte dans ladite enveloppe en étant supportée par un chariot (26) roulant sur la paroi interne de l'enveloppe, l'extrémité interne de la barre est assujettie audit isolateur support et un support amovible (36, 58 ; 76, 78) prenant appui sur l'enveloppe est mis en place pour fixer rigidement l'extrémité opposée en porte à faux et que sur le site, le support amovible est enlevé et le tronçon adjacent raccordé en assujétissant l'isolateur support à ladite extrémité ouverte de l'enveloppe et ladite autre extrémité de la barre à l'isolateur support, un outil supportant temporairement l'extrémité en porte à faux de la barre pendant la mise en place et/ou l'enlèvement dudit support amovible.

2. Procédé selon la revendication 1, caractérisé en ce que ledit outil de support temporaire de ladite autre extrémité est agencé poir laisser libre le passage du chariot et est mis en place pour autoriser l'extraction du chariot avant la mise en place dudit support amovible.

3. Procédé selon la revendication 1 ou 2, caractérisé en ce que ledit outil (30, 54) de support temporaire de l'extrémité (34) en porte à faux de la barre (24) est enlevé après mise en place du support amovible (36, 58 ; 76, 78) et remis en place avant l'enlèvement du support amovible sur le site.

4. Dispositif pour la mise en oeuvre du procédé selon l'une des revendications 1 à 3, caractérisé en ce que l'enveloppe (10) présente un embout latéral (42) dans la zone de l'extrémité (34) en porte-à-faux de la barre (24) et qu'un outil (54) de support temporaire est susceptible d'être introduit par ledit embout latéral (42) pour supporter l'extrémité en porte-à-faux.

5. Dispositif selon la revendication 4, caractérisé en ce que ledit support amovible (36) comprend un socle inséré entre la barre (24) et l'enveloppe (10) du côté dudit embout (42) et un lien (44) maintenant la barre (24) en appui du socle (36) et le socle (36) en appui de l'enveloppe (10).

6. Dispositif selon la revendication 5, caractérisé en ce que ledit lien (44) ceinture la barre (24) et traverse ledit embout (42).

7. Dispositif selon la revendication 4, caractérisé en ce que ledit support amovible (58) présente un fond (70) de fixation à l'extrémité (14) libre de l'enveloppe (10) et un doigt (64) de support de la barre (24).

8. Dispositif selon la revendication 7, caractérisé en ce que ledit fond (70) de forme conique est agencé pour une fixation en saillie vers l'intérieur ou en saillie vers l'extérieur de l'enveloppe (10) pour le support respectivement d'une extrémité (34) de barre (24) en retrait ou en saillie de l'enveloppe (10).

9. Dispositif selon la revendication 7 ou 8, caractérisé en ce que ledit fond (70) obture d'une manière étanche l'enveloppe (10) et porte un doigt (64) ayant une vis de réglage (66) pour coincer la barre (24).

10. Dispositif selon la revendication 4, caractérisé en ce que ledit support amovible comprend deux cales (76, 78) en forme de traverses susceptibles d'être intercalées entre la barre (24) et l'enveloppe (10), chaque cale portant une mâchoire (84) de serrage de la barre dans une position centrale de l'enveloppe.

## Patentansprüche

1. Montageverfahren einer Sammelschiene einer gekapselten elektrischen Hochspannungsanlage mit einer Leitschiene, die koachsial im Innern eines rohrfoermigen Kapselungs-Gehaeuses von Stuetzisolatoren getragen wird, wobei die genannte Sammelschiene in modulare Abschnitte unterteilt ist, die im Werk vorgefertigt sind und an Ort und Stelle aneinandergefuegt werden, dadurch gekennzeichnet, dass aufeinanderfolgend im Werk: - ein Stuetzisolator (16) mit einem der Enden (12, 14) des Gehaeuses (10) eines Abschnittes verbunden ist, - die Schiene (24) des genannten Abschnittes durch das andere offene Ende in das genannte Gehaeuse eingefuehrt wird und dabei von einem auf der Innenwand des Gehaeuses rollenden Wagen (26) getragen wird, - das innere Ende der Schiene mit dem genannten Stuetzisolator verbunden ist, - und ein sich auf das Gehaeuse stuetzender abnehmbarer Traeger (36, 58; 76, 78) angebracht ist, um das entgegengesetzte Ende ueberhaengend starr zu befestigen, und dass an Ort und Stelle der abnehmbare Traeger abgenommen wird und der angrenzende Abschnitt angefuegt wird, wobei der Stuetzisolator mit dem genannten offenen Ende des Gehaeuses und das genannte andere Ende der Schiene mit dem Stuetzisolator verbunden ist, wobei ein Werkzeug zeitweise das ueberhaengende Ende der Schiene traegt waehrend des Anbringens und/oder des Abnehmens des genannten beweglichen Traegers.

2. Verfahren gemaess Anspruch 1, dadurch gekennzeichnet, dass das genannte Werkzeug zum zeitweisen Tragen des genannten anderen Endes so angeordnet ist, um die Durchfahrt des Wagens frei zu lassen und so positioniert ist, um das Herausziehen des Wagens zu ermoeglichen, bevor der genannte abnehmbare Traeger in Stellung gebracht wird.

3. Verfahren gemaess Anspruch 1 oder 2, dadurch gekennzeichnet, dass das genannte Werkzeug (30, 54) zum zeitweisen Tragen des ueberhaengenden Endes (34) der Schiene (24) nach Instellungbringen des abnehmbaren Traegers (36, 58; 76, 78) abgenommen wird und vor Abnehmen des abnehmbaren Traegers an Ort und Stelle wieder in Stellung gebracht wird.

4. Vorrichtung fuer die Durchfuehrung des Verfahrens gemaess einem der Ansprueche 1-3, dadurch gekennzeichnet, dass das Gehaeuse (10) ein seitliches Kragenstueck (42) in der Zone des ueberhaengenden Endes (34) der Schiene (24) aufweist, und dass ein Werkzeug (54) zum zeitweisen Tragen durch das genannte seitliche Kragenstueck (42) eingefuehrt werden kann, um das ueberhaengende Ende zu tragen.

5. Vorrichtung gemaess Anspruch 4, dadurch gekennzeichnet, dass der genannte abnehmbare Traeger (36) einen Sockel aufweist, der zwischen der Schiene (24) und dem Gehaeuse(10) auf der Seite des genannten Kragenstueckes (42) eingefuehrt ist, sowie ein Bindeglied (44), das die Schiene (24) gegen den Sockel (36) gedrueckt haelt und den Sockel (36) gegen das Gehaeuse (10) gedrueckt haelt.

6. Vorrichtung gemaess Anspruch 5, dadurch gekennzeichnet, dass das genannte Bindeglied (44) die Schiene (24) umringt und das genannte Kragenstueck (42) durchquert.

7. Vorrichtung gemaess Anspruch 4, dadurch gekennzeichnet, dass der abnehmbare Traeger (58) einen Boden (70) aufweist zur Befestigung an das freie Ende (14) des Gehaeuses (10) und einen Finger (64) zum Tragen der Schiene (24).

8. Vorrichtung gemaess Anspruch 7, dadurch gekennzeichnet, dass der genannte kegelfoermige Boden (70) so ausgefuehrt ist, um vorspringend nach innen oder vorspringend nach aussen des Gehaeuses (10) befestigt zu werden zum Tragen eines Endes (34) der Schiene (24), das zurueckgezogen ist bzw. aus dem Gehaeuse (10) hervorspringt.

9. Vorrichtung gemaess Anspruch 7 oder 8, dadurch gekennzeichnet, dass der genannte Boden (70) das Gehaeuse (10) dicht verschliesst und einen Finger (64) traegt, der eine Stellschraube (66) aufweist, um die Schiene (24) zu klemmen.

10. Vorrichtung gemaess Anspruch 4, dadurch gekennzeichnet, dass der genannte abnehmbare Traeger zwei Keile (76, 78) in Form von Querbalken aufweist, die zwischen die Schiene (24) und das Gehaeuse(10) eingeschoben werden koennen, wobei jeder Keil eine Backe (84) aufweist zum Klemmen der Schiene in einer zentralen Lage des Gehaeuses.

**Claims**

1. Busbar assembly process for a high voltage metal-clad electrical installation, having a conductor bar coaxially supported inside a tubular metal-cladding enclosure by support insulators, said busbar being sub-divided into modular sections pre-assembled in the factory and connected to each other on the site, characterized in that successively in the factory : a support insulator (16) is fastened to one of the ends (12, 14) of the enclosure (10) of a section, the bar (24) of said section is inserted through the other open end into said enclosure being supported by a carriage (26) rolling over the internal wall of the enclosure, the internal end of the bar is fastened to said support insulator and a removable support (36, 58 ; 76, 78) bearing on the enclosure is fitted to fix rigidly the opposite overhanging end and that on the site, the removable support is removed and the adjacent section connected, the support insulator being fastened to said open end of the enclosure and said other end of the bar to the support insulator, a tool supporting temporary the overhanging end of the bar during the fitting and/or refitting of said removable support.

2. Process according to claim 1, characterized in that said temporary support tool of said other end is designed to let the passage of the carriage free and is fitted to enable the carriage to be withdrawn before the fitting of said removable support.

3. Device according to claim 1 or 2, characterized in that said temporary support tool (30, 54) of the overhanging end (34) of the bar (24) is removed after the removable support (36, 58 ; 76, 78) has been fitted and refitted before the removable support has been removed on the job site.

4. Device for the setting of the process according to one of the claim 1 to 3, characterized in that the enclosure (10) has a lateral collar (42) in the area of the overhanging end of the bar (24) and that a temporary support tool can be inserted through said lateral collar (42) to support the overhanging end.

5. Device according to claim 4, characterized in that said removable support (36) comprises a plinth inserted between the bar (24) and the enclosure (10) on said collar side (42) and a tie (44) holding the bar (24) resting on the plinth (36) bearing on the enclosure (10).

6. Device according to claim 5, characterized in that said tie (44) surrounds the bar (24) and crosses said collar (42).

7. Device according to claim 4, characterized in that said removable support (58) comprises a fixing base (70) at the free end (14) of the enclosure (10) and a finger (64) of the bar support (24).

8. Device according to claim 7, characterized in that said coneshaped base (70) is designed for a fixing projecting inside or outside the enclosure (10) for respectively the support of one end (34) of a bar (24) withdrawing or projecting the enclosure (10).

9. Device according to claim 7 or 8, characterized in that said base (70) seals the enclosure (10) tightly and supports a finger (64) having a set-screw (66) to bind the bar (24).

10. Device according to claim 4, characterized in that said removable support comprises two wedges (76, 78) fitted between the bar (24) and the enclosure (10), each wedge having a jaw (84) clamping the bar in a central position of the enclosure.

0 121 455

Fig. 1

Fig. 3

Fig. 2

Fig. 5

Fig. 4

Fig. 6

1

Fig. 7

Fig. 9

Fig. 8

Fig. 10

Fig. 11

Fig. 13

Fig. 12

Fig. 15

Fig. 14